# FASCICULE DE BREVET EUROPEEN

(11) **EP 3 802 230 B1**
(45) Date de publication et mention de la délivrance du brevet: **29.05.2024**
(21) Numéro de dépôt: 19791301.5
(22) Date de dépôt: 16.04.2019
(51) Int. Cl.: B60R 16/03, H02J 7/14, H02M 1/32, H02M 3/156

(54) **GESTION DE L'ALIMENTATION D'UN RÉSEAU ÉLECTRIQUE D'UN VÉHICULE AUTOMOBILE HYBRIDE**
VERWALTUNG DER STROMVERSORGUNG EINES BORDNETZES EINES HYBRIDFAHRZEUGS
MANAGEMENT OF THE POWER SUPPLY TO AN ON-BOARD ELECTRICAL NETWORK OF A HYBRID MOTOR VEHICLE

(30) Priorité: 24.05.2018 FR 1854359
(43) Date de publication de la demande: 14.04.2021
(73) Titulaire: Stellantis Auto SAS, 78300 Poissy (FR)
(72) Inventeur: MILHAU, Yohan, 78630 Orgeval (FR); HABBANI, Ridouane, 92600 Asnières- sur-Seine (FR)
(86) Numéro de dépôt international: PCT/FR2019/050905
(87) Numéro de publication internationale: WO 2019/224440

(56) Documents cités:
- WO-A1-01/21445
- DE-A1-102013 213 488
- DE-B3-102008 003 835
- DE-U1- 8 915 059
- FR-A1- 2 969 846
- FR-A1- 3 005 624
- JP-A- 2008 174 100
- JP-A- 2016 107 734
- US-A1- 2016 105 105

## Description

L'invention a trait à l'alimentation d'un réseau électrique alimentant au moins un organe de sécurité d'un véhicule automobile, et plus particulièrement à une stratégie d'utilisation d'un alternateur apte à alimenter le réseau électrique d'un véhicule automobile à motorisation hybride thermique et électrique.

Les véhicules automobiles comprennent de multiples organes de sécurité tels que le système d'éclairage mais également l'aide au freinage, l'aide à la traction ou encore les différents calculateurs contrôlant ces systèmes et aides.

L'alimentation en énergie électrique de ces organes de sécurité est essentielle pour assurer un bon fonctionnement du véhicule automobile mais surtout pour réduire les risques d'accidents ou de dommages corporels lors d'un accident.

Lors des phases de roulage réalisé avec le moteur thermique d'un véhicule automobile à motorisation hybride thermique et électrique, le réseau électrique est soit alimenté par le biais d'un alternateur relié au moteur thermique soit alimenté par le biais d'un convertisseur de puissance connecté à une batterie de traction. Lors des phases de roulage réalisé avec la motorisation électrique du véhicule automobile à motorisation hybride thermique et électrique, le réseau électrique est alimenté par le biais d'un convertisseur de puissance connecté soit à la motorisation électrique, apte, par ailleurs, à mettre en mouvement le véhicule automobile, soit à la batterie de traction.

Cependant, le convertisseur peut chauffer et, ainsi, réduire ses performances, ce qui altère l'alimentation du réseau électrique.

Le document FR2969846_A1 décrit un véhicule automobile comprenant plusieurs convertisseurs aptes à alimenter en énergie électrique le réseau électrique du véhicule automobile. Le véhicule automobile comprend un module d'équilibrage du courant en fonction de la température de chacun des convertisseurs.

Un tel procédé permet effectivement d'assurer une certaine pérennité de l'alimentation d'un réseau électrique d'un véhicule automobile lorsque l'augmentation de la température d'un des convertisseurs pourrait compromettre son intégrité. En revanche, un véhicule automobile tel que décrit dans le document FR2969846_B1 nécessite l'ajout d'un deuxième convertisseur assurant uniquement une fonction de sécurité.

L'objectif de l'invention est de proposer un procédé assurant une alimentation pérenne et stable en énergie électrique d'un réseau électrique d'un véhicule automobile à motorisation hybride thermique et électrique, lors des phases de roulage réalisé avec le moteur thermique du véhicule automobile, lorsque le convertisseur présente une température élevée, sans ajout de pièce de sorte à réduire le poids, donc la consommation, le temps de fabrication et le coût d'un véhicule automobile.

A cet effet, il est proposé, en premier lieu, un procédé d'alimentation d'un réseau électrique d'un véhicule automobile au cours d'une phase de roulage réalisée par le biais d'une motorisation électrique du véhicule automobile, le véhicule automobile comprenant un moteur thermique, un alternateur entrainé par le moteur thermique, l'alternateur étant connecté au réseau électrique, et un convertisseur de puissance assurant l'alimentation en énergie électrique du réseau électrique, le procédé d'alimentation comprenant une étape de comparaison d'une valeur courante d'une température du convertisseur avec une valeur seuil et, lorsque la valeur courante de la température du convertisseur est supérieure à la valeur seuil, une étape de diminution de l'alimentation en énergie électrique fournie par le convertisseur au réseau électrique, le procédé d'alimentation comprenant, avant l'étape de diminution de l'alimentation, une étape d'inspection d'un état de fonctionnement du moteur thermique et, lorsque, lors de ladite étape d'inspection, le moteur thermique est en fonction, le procédé comprend une étape de compensation de l'étape de diminution de l'alimentation en énergie électrique fournie par le convertisseur au réseau électrique, par une alimentation en énergie électrique du réseau électrique par l'alternateur.

Le procédé d'alimentation impose ainsi, lors des phases de roulage du véhicule automobile réalisées avec la motorisation électrique, l'utilisation forcée de l'alternateur par rapport à un fonctionnement ordinaire du véhicule automobile, lorsque le moteur thermique est en fonction, afin d'alimenter le réseau électrique. Cela permet de diminuer l'utilisation du convertisseur et, ainsi, de réduire sa température.

Diverses caractéristiques supplémentaires peuvent être prévues, seules ou en combinaison :
- le procédé comprend, lorsque, lors de l'étape d'inspection de l'état de fonctionnement du moteur thermique, le moteur thermique est arrêté, une autre étape de comparaison de la valeur courante de ladite température relevée avec une valeur critique, la valeur seuil étant inférieure à la valeur critique et, lorsque la valeur courante de la température est supérieure à la valeur critique, ledit procédé comprend une étape de démarrage forcé du moteur thermique, et une étape d'affaiblissement de l'alimentation en énergie électrique fournie par le convertisseur au réseau électrique, l'étape d'affaiblissement étant compensée par une étape de compensation par une alimentation en énergie électrique du réseau électrique par l'alternateur ; le procédé d'alimentation impose ainsi le démarrage forcé du moteur thermique et l'alimentation forcée par l'alternateur du réseau électrique, par rapport à un fonctionnement ordinaire du véhicule automobile, même si le moteur thermique est arrêté, de sorte à maintenir le bon fonctionnement du véhicule automobile, lorsque la température du convertisseur pourrait compromettre son intégrité, afin de réduire les risques d'accidents ou de dommages corporels lors d'un accident ;
- la valeur critique est segmentée en une valeur critique d'augmentation et une valeur critique de diminution inférieure à la valeur critique d'augmentation et, lorsque la valeur courante de la température du convertisseur augmente et est supérieure à la valeur critique d'augmentation, le moteur thermique est démarré et l'alternateur est utilisé pour alimenter le réseau électrique jusqu'à ce que la valeur courante de la température soit inférieure à la valeur critique de diminution ; la valeur critique d'augmentation et la valeur critique de diminution, étant différentes, empêchent ainsi une commutation intempestive entre le démarrage et la mise à l'arrêt du moteur thermique pouvant survenir dans le cas où la valeur critique de la température ne serait pas segmentée et que la valeur courante de la température du convertisseur serait sensiblement égale à la valeur critique ;
- la valeur seuil est segmentée en une valeur seuil d'augmentation et une valeur seuil de diminution inférieure à la valeur seuil d'augmentation et, lorsque la valeur courante de la température du convertisseur augmente et est comprise entre à la valeur seuil d'augmentation et la valeur critique et lorsque le moteur thermique est en fonction, l'alternateur est utilisé pour alimenter le réseau électrique jusqu'à ce que la valeur courante de la température soit inférieure à la valeur seuil de diminution ; la valeur seuil d'augmentation et la valeur seuil de diminution, étant différentes, empêchent ainsi une commutation intempestive entre l'utilisation et l'arrêt de l'utilisation de l'alternateur pouvant survenir dans le cas où la valeur seuil de la température ne serait pas segmentée et que la valeur courante de la température du convertisseur serait sensiblement égale à la valeur seuil.

Il est proposé, en second lieu, un véhicule automobile comprenant :
- un réseau électrique ;
- une motorisation électrique ;
- un moteur thermique ;
- un alternateur entrainé par le moteur thermique, l'alternateur étant connecté au réseau électrique ;
- un convertisseur assurant l'alimentation, en énergie électrique, du réseau électrique ;
- un capteur de température du convertisseur ;
le véhicule automobile comportant un moyen de mise en oeuvre d'un procédé d'alimentation tel que précédemment décrit.

Diverses caractéristiques supplémentaires peuvent être prévues, seules ou en combinaison :
- le véhicule comprend une batterie de traction et la motorisation électrique comprend un onduleur, la batterie de traction et l'onduleur étant connectés au réseau électrique par le biais du convertisseur ;
- le véhicule comprend un moyen de liaison du moteur thermique et de la motorisation électrique ;
- le véhicule comprend une deuxième motorisation électrique couplée à au moins une roue arrière du véhicule automobile et la motorisation électrique et le moteur thermique sont couplés à au moins une roue avant du véhicule automobile ;

- la deuxième motorisation électrique est munie d'un deuxième onduleur, le deuxième onduleur étant connecté au réseau électrique par le biais du convertisseur ;
- l'alternateur est un alterno-démarreur ou l'alternateur est un alterno-démarreur et le véhicule automobile comprend une prise permettant la recharge de la batterie de traction par une alimentation externe.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une représentation d'un véhicule automobile schématisant l'alimentation, par un convertisseur ou par un alternateur, d'un réseau électrique connecté à des organes de sécurité du véhicule automobile ;
- la figure 2 est une représentation schématique d'étapes d'un procédé d'alimentation du réseau électrique ;
- la figure 3 est un graphique représentant, de haut en bas, une valeur courante de la température du convertisseur en fonction du temps, une commande de démarrage d'un moteur thermique du véhicule automobile, un état de fonctionnement courant du moteur thermique et une commande d'utilisation de l'alternateur.

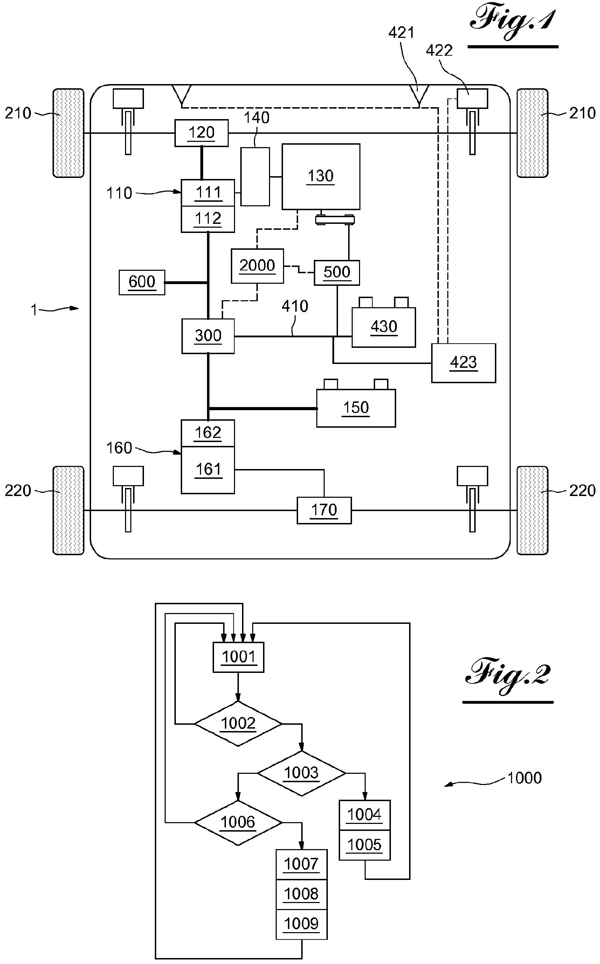

La figure 1 représente un véhicule 1 automobile comprenant une première motorisation 110 électrique et un premier dispositif 120 de couplage de la première motorisation 110 électrique à au moins une des roues 210 avant du véhicule 1 automobile.

Le véhicule 1 automobile comprend un moteur 130 thermique et un moyen 140 de liaison du moteur 130 thermique à la première motorisation 110 électrique de sorte à coupler le moteur 130 thermique à ladite au moins une roue 210 avant.

Dans un mode de réalisation différent, la première motorisation 110 électrique et le moteur 130 thermique sont couplées à au moins une des roues 220 arrière. En variante, la première motorisation 110 électrique ou le moteur 130 thermique est couplé, par le biais d'un autre dispositif de couplage, à au moins une des roues 220 arrière.

Le véhicule 1 automobile comprend également un convertisseur 300 connectant la première motorisation 110 électrique et un réseau 410 électrique alimentant des organes de sécurité du véhicule 1 automobile.

Le véhicule 1 automobile comprend un capteur de température T du convertisseur 300 (non représenté).

Le véhicule 1 automobile comprend un alternateur 500 entrainé par le moteur 130 thermique et connecté au réseau 410 électrique alimentant les organes de sécurité du véhicule 1 automobile.

L'alternateur 500 est, de préférence, apte à démarrer le moteur 130 thermique du véhicule 1 automobile. Dans ce cas, l'alternateur 500 est nommé alterno-démarreur et le véhicule 1 automobile est dit « micro-hybride » ou « mild-hybride ».

Les organes de sécurité sont, par exemple, un système 421 d'éclairage, un système 422 d'aide au freinage ou encore différents calculateurs 423 contrôlant ces système et aide.

Selon le mode de réalisation représenté, la première motorisation 110 électrique comprend une première machine 111 électrique apte à être couplée, par le biais du premier dispositif 120 de couplage, à ladite au moins une roue 210 avant et un premier onduleur 112 connectant la première motorisation 110 électrique au convertisseur 300.

Le convertisseur 300 est apte à assurer l'alimentation, en énergie électrique, du réseau 410 électrique depuis la première motorisation 110 électrique ou depuis une batterie 150 de traction connectée au convertisseur 300 et au premier onduleur 112 de la première motorisation 110 électrique.

Selon le mode de réalisation représenté, la batterie 150 de traction est apte à être rechargée par le biais de la première motorisation 110 électrique et/ou, dans le cas d'un véhicule 1 automobile hybride rechargeable, par le biais d'une alimentation externe connectable à une prise 600 du véhicule 1 automobile, le véhicule 1 automobile est dit hybride rechargeable ou « PHEV ». La batterie 150 de traction est apte à alimenter la première motorisation 110 électrique.

L'alternateur 500 est également apte à assurer l'alimentation, en énergie électrique, du réseau 410 électrique par le biais du moteur 130 thermique.

Dans le mode de réalisation illustré, le réseau 410 électrique est connecté à une batterie 430 de bord palliant un défaut d'alimentation momentané, du réseau 410 électrique, par le convertisseur 300 ou par l'alternateur 500. Cependant, la batterie 430 de bord ne peut assurer une coupure ou une baisse de l'alimentation pendant un long moment.

Lors d'une forte sollicitation du convertisseur 300 celui-ci chauffe amoindrissant ses capacités d'alimentation en énergie électrique du réseau 410 électrique.

Afin d'améliorer la pérennité de l'alimentation, en énergie électrique, du réseau 410 électrique, un procédé 1000 d'alimentation du réseau 410 électrique du véhicule 1 automobile au cours d'une phase de roulage réalisée par le biais de la première motorisation 110 électrique, représenté sur la figure 2, comprend :
- une étape 1001 de relève d'une température T du convertisseur 300 ;
- une première étape 1002 de comparaison d'une valeur Tc courante de ladite température T relevée avec une valeur T₁,T₂ seuil ;

lorsque la valeur Tc courante de la température T du convertisseur 300 est supérieure, ou supérieure ou égale, à la valeur T₁,T₂ seuil,
   - une étape 1003 d'inspection d'un état E_{M} de fonctionnement du moteur 130 thermique, vérifiant si le moteur 130 thermique est en fonction ou est arrêté ;
lorsque le moteur 130 thermique est en fonction,
   - une étape 1004 de diminution de l'alimentation en énergie électrique fournie, par le convertisseur 300, au réseau 410 électrique ;
   - une première étape 1005 de compensation de la diminution 1004 de l'alimentation en énergie électrique fournie, par le convertisseur 300, au réseau 410 électrique, par une alimentation A_{F} forcée, par l'alternateur 500, en énergie électrique, du réseau 410 électrique.

Les termes « le moteur 130 thermique est en fonction » signifient que le moteur 130 thermique est susceptible, lorsqu'il est couplé à au moins une des roues 210,220 du véhicule 1 automobile, de fournir un travail à ladite au moins une des roues 210,220.

Les termes « le moteur 130 thermique est arrêté » signifient que le moteur 130 thermique n'est pas susceptible, lorsqu'il est couplé à au moins une des roues 210,220 du véhicule 1 automobile, de fournir un travail à ladite au moins une des roues 210,220.

Le procédé 1000 d'alimentation impose ainsi, lors des phases de roulage du véhicule 1 automobile réalisées avec la première motorisation 110 électrique, l'utilisation A_{F} forcée de l'alternateur 500, par rapport à un fonctionnement ordinaire du véhicule 1 automobile, lorsque le moteur 130 thermique est en fonction, afin d'alimenter le réseau 410 électrique. Cela permet de diminuer l'utilisation du convertisseur 300 et, ainsi, de réduire sa température T.

Dans le mode de réalisation représenté, l'étape 1004 de diminution et la première étape 1005 de compensation sont réalisées simultanément.

Dans des modes de réalisation différents, l'étape 1004 de diminution et la première étape 1005 de compensation sont réalisées dans un ordre différent.

Selon le mode de réalisation illustré, est entendu par phase de roulage réalisée par le biais de la première motorisation 110 électrique, toute phase où le réseau 410 électrique est alimenté par le convertisseur 300.

Dans le mode de réalisation représenté, le procédé 1000 d'alimentation est réalisé en boucle, à intervalle régulier.

Le procédé 1000 d'alimentation comprend également, lorsque, à l'étape 1003 d'inspection de l'état E_{M} de fonctionnement du moteur 130 thermique, le moteur 130 thermique est arrêté :
- une deuxième étape 1006 de comparaison de la valeur Tc courante de ladite température T relevée avec une valeur T₃,T₄ critique, la valeur T₁,T₂ seuil étant inférieure à la valeur T₃,T₄ critique ;
lorsque la valeur Tc courante de la température T est supérieure, ou supérieure ou égale, à la valeur T₃,T₄ critique,
- une étape 1007 de démarrage D_{F} forcé du moteur 130 thermique ;
- une étape 1008 d'affaiblissement de l'alimentation en énergie électrique fournie, par le convertisseur 300, au réseau 410 électrique ;
- une deuxième étape 1009 de compensation de l'affaiblissement 1008 de l'alimentation en énergie électrique fournie, par le convertisseur 300, au réseau 410 électrique, par une alimentation A_{F} forcée, par l'alternateur 500, en énergie électrique, du réseau 410 électrique.

L'étape 1007 de démarrage du moteur 130 thermique permet de faire passer le moteur 130 thermique depuis l'état E_{M} de fonctionnement « arrêté » à l'état E_{M} de fonctionnement « en fonction ».

Le procédé 1000 d'alimentation impose ainsi le démarrage D_{F} forcé du moteur 130 thermique et l'alimentation A_{F} forcée par l'alternateur 500 du réseau 410 électrique, par rapport à un fonctionnement ordinaire du véhicule automobile, même si le moteur 130 thermique est arrêté, de sorte à maintenir le bon fonctionnement du véhicule 1 automobile, lorsque la température T du convertisseur 300 pourrait compromettre son intégrité, afin de réduire les risques d'accidents ou de dommages corporels lors d'un accident.

Le procédé 1000 minimise l'utilisation du moteur 130 thermique, de sorte à ne pas forcer le démarrage du moteur 130 thermique dans des situations dans lesquelles le moteur 130 thermique pourrait être arrêté afin de réduire la consommation et la pollution émise par le véhicule 1 automobile tout en minimisant le dimensionnement du convertisseur 300.

Dans le mode de réalisation représenté, l'étape 1007 de démarrage, l'étape 1008 d'affaiblissement et la deuxième étape 1009 de compensation sont réalisées simultanément.

Dans des modes de réalisation différents, l'étape 1007 de démarrage, l'étape 1008 d'affaiblissement et la deuxième étape 1009 de compensation sont réalisées dans un ordre différent.

Dans des modes de réalisation non représentés, l'étape 1004 de diminution et l'étape 1008 d'affaiblissement ainsi que la première étape 1005 de compensation et la deuxième étape 1009 de compensation sont identiques et peuvent appeler à une même commande.

Le véhicule 1 automobile comprend un moyen 2000 de mise en oeuvre du procédé 1000 d'alimentation du réseau 410 électrique.

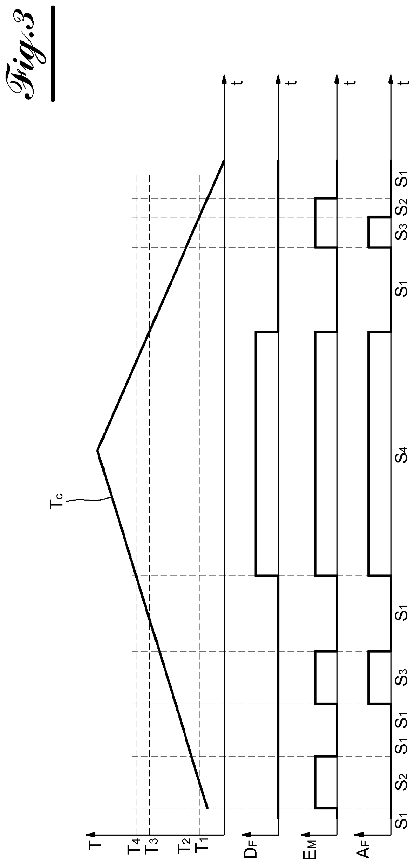

Comme illustré sur la figure 3, dans le mode de réalisation représenté, la valeur T₁,T₂ seuil est segmentée en une valeur T₂ seuil d'augmentation et une valeur T₁ seuil de diminution. La valeur T₂ seuil d'augmentation est supérieure à la valeur T₁ seuil de diminution.

La valeur T₃,T₄ critique est segmentée en une valeur T₄ critique d'augmentation et une valeur T₃ critique de diminution. La valeur T₄ critique d'augmentation est supérieure à la valeur T₃ critique de diminution.

Les graphiques représentent, de haut en bas :
- la valeur Tc courante de la température T du convertisseur 300 en fonction du temps t ;
- une commande de démarrage D_{F} forcé du moteur 130 thermique en fonction du temps t, évoluant par rapport à la valeur Tc courante de la température T ;
- un état E_{M} de fonctionnement du moteur 130 thermique en fonction du temps t ;
- une alimentation A_{F} forcée par l'alternateur 500 en fonction du temps t, évoluant par rapport à la valeur Tc courante de la température T.

La figure 3 permet de visualiser que :
- dans une première situation S₁, lorsque le moteur 130 thermique est arrêté et lorsque la valeur Tc courante de la température T du convertisseur 300 est inférieure, ou inférieure ou égale, à la valeur T₄ critique d'augmentation, le démarrage du moteur 130 thermique n'est pas forcé et l'alternateur 500 n'est donc pas utilisé pour alimenter le réseau 410 électrique ;
- dans une deuxième situation S₂, lorsque le moteur 130 thermique est en fonction et lorsque la valeur Tc courante de la température T du convertisseur 300 est inférieure, ou inférieure ou égale, à la valeur T₂ seuil d'augmentation, l'alternateur 500 n'est pas utilisé de manière forcée pour alimenter le réseau 410 électrique ;
- dans une troisième situation S₃, lorsque le moteur 130 thermique est en fonction et lorsque la valeur Tc courante de la température T du convertisseur 300 est supérieure, ou supérieure ou égale, la valeur T₂ seuil d'augmentation, l'alternateur 500 est utilisé de manière forcée, pour alimenter le réseau 410 électrique, jusqu'à ce que la valeur Tc courante de la température T soit inférieure, ou inférieure ou égale, à la valeur T₁ seuil de diminution ;
- dans une quatrième situation S₄, lorsque le moteur 130 thermique est arrêté et lorsque la valeur Tc courante de la température T du convertisseur 300 est supérieure, ou supérieure ou égale, à la valeur T₄ critique d'augmentation, le moteur 130 thermique est démarré d'une manière forcée et l'alternateur 500 est utilisé de manière forcée, pour alimenter le réseau 410 électrique, jusqu'à ce que la valeur Tc courante de la température T soit inférieure, ou inférieure ou égale, à la valeur T₃ critique de diminution.

La valeur T₂ seuil d'augmentation et la valeur T₁ seuil de diminution, étant différentes, empêchent ainsi une commutation intempestive entre l'utilisation et l'arrêt de l'utilisation de l'alternateur 500 pouvant survenir dans le cas où la valeur T₁,T₂ seuil de la température T ne serait pas segmentée et que la valeur Tc courante de la température T du convertisseur 300 serait sensiblement égale à la valeur T₁,T₂ seuil.

La valeur T₄ critique d'augmentation et la valeur T₃ critique de diminution, étant différentes, empêchent ainsi une commutation intempestive entre le démarrage et la mise à l'arrêt du moteur 130 thermique pouvant survenir dans le cas où la valeur T₃,T₄ critique de la température T ne serait pas segmentée et que la valeur Tc courante de la température T du convertisseur 300 serait sensiblement égale à la valeur T₃,T₄ critique.

Selon le mode de réalisation représenté, l'alimentation en énergie électrique du réseau 410 électrique, par le convertisseur 300, est réduite voire supprimée.

Dans des modes de réalisation différents, la valeur T₁,T₂ seuil et la valeur T₃,T₄ critique dépendent, par exemple, de la vitesse du véhicule 1 automobile, du mode de conduite (économique, quatre roues motrices, sportif, ...) ou encore de l'altitude.

Dans des modes de réalisation différents, la température T relevée est, par exemple, celle d'un système de refroidissement du convertisseur 300 ou encore la température extérieure.

Dans des modes de réalisation différents, la valeur T₁,T₂ seuil et la valeur T₃,T₄ critique utilisées dans le procédé 1000 d'alimentation pourraient être modifiée en fonction d'un état d'usure du convertisseur 300.

Dans le mode de réalisation représenté, le véhicule 1 automobile comprend une deuxième motorisation 160 électrique et un deuxième dispositif 170 de couplage de la deuxième motorisation 160 électrique à au moins une des roues 220 arrière du véhicule 1 automobile.

Dans un mode de réalisation différent, la deuxième motorisation 160 électrique est couplée à au moins une des roues 210 avant du véhicule 1 automobile.

Le convertisseur 300 connecte la deuxième motorisation 160 électrique et le réseau 410 électrique. Le convertisseur 300 est apte à assurer l'alimentation, en énergie électrique, du réseau 410 électrique depuis la deuxième motorisation 160 électrique.

Selon le mode de réalisation représenté, la batterie 150 de traction est apte à être rechargée par le biais de la deuxième motorisation 160 électrique. La batterie 150 de traction est apte à alimenter la deuxième motorisation 160 électrique.

Selon le mode de réalisation représenté, la deuxième motorisation 160 électrique comprend une deuxième machine 161 électrique apte à être couplée, par le biais du deuxième dispositif 170 de couplage, à ladite au moins une roue 220 arrière et un deuxième onduleur 162 connectant la deuxième motorisation 160 électrique au convertisseur 300.

Dans le mode de réalisation représenté, le convertisseur 300, la première motorisation 110 électrique, la deuxième motorisation 160 électrique et la batterie 150 de traction sont connectés à un réseau dit basse tension. La tension est, par exemple, comprise entre deux cents et trois cents volts ou sensiblement égale à quarante-huit volts.

Dans le mode de réalisation illustré, le réseau 410 électrique est dit très basse tension. La tension est, par exemple, égale à douze ou vingt-quatre volts.

## Revendications

1. Procédé (1000) d'alimentation d'un réseau (410) électrique d'un véhicule (1) automobile au cours d'une phase de roulage réalisée par le biais d'une motorisation (110,160) électrique du véhicule (1) automobile, le véhicule (1) automobile comprenant un moteur (130) thermique, un alternateur (500) entrainé par le moteur (130) thermique, l'alternateur (500) étant connecté au réseau (410) électrique, et un convertisseur (300) de puissance assurant l'alimentation en énergie électrique du réseau (410) électrique, le procédé (1000) d'alimentation comprenant une étape (1002) de comparaison d'une valeur (Tc) courante d'une température (T) du convertisseur (300) avec une valeur (T₁,T₂) seuil et, lorsque la valeur (Tc) courante de la température (T) du convertisseur (300) est supérieure à la valeur (T₁,T₂) seuil, une étape (1004) de diminution de l'alimentation en énergie électrique fournie par le convertisseur (300) au réseau (410) électrique, le procédé (1000) d'alimentation étant **caractérisé en ce qu'**il comprend, avant l'étape (1004) de diminution de l'alimentation, une étape (1003) d'inspection d'un état (E_{M}) de fonctionnement du moteur (130) thermique et, lorsque, lors de ladite étape (1003) d'inspection, le moteur (130) thermique est en fonction, le procédé (1000) comprend une étape (1005) de compensation de l'étape (1004) de diminution de l'alimentation en énergie électrique fournie par le convertisseur (300) au réseau (410) électrique, par une alimentation (A_{F}) en énergie électrique du réseau (410) électrique par l'alternateur (500).

2. Procédé (1000) d'alimentation selon la revendication précédente, **caractérisé en ce qu'**il comprend, lorsque, lors de l'étape (1003) d'inspection de l'état (E_{M}) de fonctionnement du moteur (130) thermique, le moteur (130) thermique est arrêté, une autre étape (1006) de comparaison de la valeur (Tc) courante de ladite température (T) relevée avec une valeur (T₃,T₄) critique, la valeur (T₁,T₂) seuil étant inférieure à la valeur (T₃,T₄) critique et, lorsque la valeur (Tc) courante de la température (T) est supérieure à la valeur (T₃,T₄) critique, ledit procédé (1000) comprend une étape (1007) de démarrage (D_{F}) forcé du moteur (130) thermique, et une étape (1008) d'affaiblissement de l'alimentation en énergie électrique fournie par le convertisseur (300) au réseau (410) électrique, l'étape (1008) d'affaiblissement étant compensée par une étape (1009) de compensation par une alimentation (A_{F}) en énergie électrique du réseau (410) électrique par l'alternateur (500).

3. Procédé (1000) d'alimentation selon la revendication précédente, **caractérisé en ce que** la valeur (T₃,T₄) critique est segmentée en une valeur (T₄) critique d'augmentation et une valeur (T₃) critique de diminution inférieure à la valeur (T₄) critique d'augmentation et **en ce que**, lorsque la valeur (Tc) courante de la température (T) du convertisseur (300) augmente et est supérieure à la valeur (T₄) critique d'augmentation, le moteur (130) thermique est démarré et l'alternateur (500) est utilisé pour alimenter le réseau (410) électrique jusqu'à ce que la valeur (Tc) courante de la température (T) soit inférieure à la valeur (T₃) critique de diminution.

4. Procédé (1000) d'alimentation selon l'une quelconque des revendications précédentes, **caractérisé en ce que** la valeur (T₁,T₂) seuil est segmentée en une valeur (T₂) seuil d'augmentation et une valeur (T₁) seuil de diminution inférieure à la valeur (T₂) seuil d'augmentation et **en ce que**, lorsque la valeur (Tc) courante de la température (T) du convertisseur (300) augmente et est comprise entre à la valeur (T₂) seuil d'augmentation et la valeur (T₃,T₄) critique et lorsque le moteur (130) thermique est en fonction, l'alternateur (500) est utilisé pour alimenter le réseau (410) électrique jusqu'à ce que la valeur (Tc) courante de la température (T) soit inférieure à la valeur (T₁) seuil de diminution.

5. Véhicule (1) automobile comprenant :
- un réseau (410) électrique ;
- une motorisation (110,160) électrique ;
- un moteur (130) thermique ;
- un alternateur (500) entrainé par le moteur (130) thermique, l'alternateur (500) étant connecté au réseau (410) électrique ;
- un convertisseur (300) assurant l'alimentation, en énergie électrique, du réseau (410) électrique ;
- un capteur de température (T) du convertisseur (300) ;
le véhicule (1) automobile étant **caractérisé en ce qu'**il comporte un moyen (2000) de mise en oeuvre d'un procédé (1000) d'alimentation selon l'une quelconque des revendications précédentes.

6. Véhicule (1) automobile selon la revendication précédente, **caractérisé en ce qu'**il comprend une batterie (150) de traction et **en ce que** la motorisation (110,160) électrique comprend un onduleur (112,162), la batterie (150) de traction et l'onduleur (112,162) étant connectés au réseau (410) électrique par le biais du convertisseur (300).

7. Véhicule (1) automobile selon l'une des revendications 5 et 6, **caractérisé en ce qu'**il comprend un moyen (140) de liaison du moteur (130) thermique et de la motorisation (110) électrique.

8. Véhicule (1) automobile selon l'une quelconque des revendications 5 à 7, **caractérisé en ce qu'**il comprend une deuxième motorisation (160) électrique couplée à au moins une roue (220) arrière du véhicule (1) automobile et **en ce que** la motorisation (110) électrique et le moteur (130) thermique sont couplés à au moins une roue (210) avant du véhicule (1) automobile.

9. Véhicule (1) automobile selon la revendication précédente, **caractérisé en ce que** la deuxième motorisation (160) électrique est munie d'un deuxième onduleur (162), le deuxième onduleur (162) étant connecté au réseau (410) électrique par le biais du convertisseur (300).

10. Véhicule (1) automobile selon l'une quelconque des revendications 6 à 9, **caractérisé en ce que** l'alternateur (500) est un alterno-démarreur ou **en ce que** l'alternateur (500) est un alterno-démarreur et le véhicule (1) automobile comprend une prise (600) permettant la recharge de la batterie (150) de traction par une alimentation externe.

## Patentansprüche

1. Verfahren (1000) zur Versorgung eines elektrischen Netzes (410) eines Kraftfahrzeugs (1) während einer mittels eines Elektromotors (110,160) des Kraftfahrzeugs (1) durchgeführten Fahrphase, wobei das Kraftfahrzeug (1) umfasst: a Wärmekraftmaschine (130), einen von der Wärmekraftmaschine (130) angetriebenen Wechselstromgenerator (500), wobei der Wechselstromgenerator (500) mit dem Stromnetz (410) verbunden ist, und einen Leistungswandler (300), der die Versorgung mit elektrischer Energie gewährleistet das elektrische Netzwerk (410), wobei das Versorgungsverfahren (1000) einen Schritt (1002) des Vergleichens eines aktuellen Werts (Tc) einer Temperatur (T) des Wandlers (300) mit einem Schwellenwert (T₁, T₂) umfasst. und, wenn der aktuelle Wert (Tc) der Temperatur (T) des Wandlers (300) größer als der Schwellenwert (T₁, T₂) ist, einen Schritt (1004) zum Reduzieren der vom Wandler gelieferten elektrischen Energiezufuhr (300) an das elektrische Netz (410), wobei das Versorgungsverfahren (1000) **dadurch gekennzeichnet ist, dass** es vor dem Schritt (1004) der Reduzierung der Stromversorgung einen Schritt (1003) der Überprüfung eines Zustands (E_{M}) umfasst. des Betriebs des Thermomotors (130) und, wenn während des Inspektionsschritts (1003) der Thermomotor (130) in Betrieb ist, umfasst das Verfahren (1000) einen Schritt (1005) zum Kompensieren des Schritts (1004). Reduzieren der vom Wandler (300) an das Stromnetz (410) gelieferten elektrischen Energiezufuhr durch eine Stromversorgung (A_{F}) in elektrischer Energie aus dem Stromnetz (410) durch den Wechselstromgenerator (500).

2. Stromversorgungsverfahren (1000) nach dem vorhergehenden Anspruch, **dadurch gekennzeichnet, dass** es umfasst, dass während des Schritts (1003) der Überprüfung des Betriebszustands (E_{M}) des Wärmemotors (130) der Wärmemotor (130) ausgeschaltet wird gestoppt, ein weiterer Schritt (1006) des Vergleichens des aktuellen Werts (Tc) der Temperatur (T), der aufgezeichnet wurde, mit einem kritischen Wert (T₃, T₄), wobei der Schwellenwert (T₁, T₂) niedriger als der kritische Wert ist (T₃, T₄) und wenn der aktuelle Wert (Tc) der Temperatur (T) größer als der kritische Wert (T₃ T₄) ist, umfasst das Verfahren (1000) einen Schritt (1007) des Zwangsstarts (D_{F}) des thermischen Motors (130) und einen Schritt (1008) des Abschwächens der vom Umrichter (300) an das elektrische Netz (410) gelieferten elektrischen Energieversorgung, wobei der Abschwächungsschritt (1008) durch eine Kompensation ausgeglichen wird Schritt (1009) durch eine Zufuhr (A_{F}) elektrischer Energie aus dem Stromnetz (410) durch den Generator (500).

3. Versorgungsverfahren (1000) nach dem vorhergehenden Anspruch, **dadurch gekennzeichnet, dass** der kritische Wert (T₃, T₄) beim kritischen Anstieg in einen kritischen Anstiegswert (T₄) und einen unteren kritischen Abfallwert (T₃) segmentiert wird Wert (T₄) und dass, wenn der aktuelle Wert (Tc) der Temperatur (T) des Konverters (300) ansteigt und größer als der kritische Anstiegswert (T₄) ist, die Wärmekraftmaschine (130) gestartet wird und der Wechselstromgenerator (500) wird verwendet, um das Stromnetz (410) mit Strom zu versorgen, bis der aktuelle Wert (Tc) der Temperatur (T) niedriger als der kritische Abfallwert (T₃) ist.

4. Stromversorgungsverfahren (1000) nach einem der vorhergehenden Ansprüche, **dadurch gekennzeichnet, dass** der Schwellenwert (T₁, T₂) in einen Anstiegsschwellenwert (T₂) und einen Anstiegsschwellenwert (T₁) segmentiert wird der Anstiegsschwellenwert (T₂) und dass , wenn der aktuelle Wert (Tc) der Temperatur (T) des Wandlers (300) zunimmt und zwischen dem Anstiegsschwellenwert (T₂) und dem kritischen Wert (T₃, T₄) liegt, und wenn der Wärmemotor (130) in Betrieb ist, wird der Wechselstromgenerator (500) Verwendet, um das Stromnetz (410) mit Strom zu versorgen, bis der tatsächliche Wert (Tc) der Temperatur (T) niedriger als der Reduzierungsschwellenwert (T₁) ist.

5. Kraftfahrzeug (1) umfassend:
- ein elektrisches Netzwerk (410);
- ein Elektromotor (110,160);
- eine Wärmekraftmaschine (130);
- einen Wechselstromgenerator (500), der von der Wärmekraftmaschine (130) angetrieben wird, wobei der Wechselstromgenerator (500) mit dem Stromnetz (410) verbunden ist;
- einen Konverter (300), der die Versorgung des elektrischen Netzes (410) mit elektrischer Energie sicherstellt;
- ein Temperatursensor (T) des Konverters (300);
wobei das Kraftfahrzeug (1) **dadurch gekennzeichnet ist, dass** es Mittel (2000) zur Implementierung eines Stromversorgungsverfahrens (1000) nach einem der vorhergehenden Ansprüche umfasst.

6. Kraftfahrzeug (1) nach dem vorhergehenden Anspruch, **dadurch gekennzeichnet, dass** es eine Traktionsbatterie (150) umfasst und dass der Elektromotor (110,160) einen Wechselrichter (112,162) umfasst, wobei die Traktionsbatterie (150) und der Wechselrichter (112,162) über den Konverter (300) mit dem elektrischen Netz (410) verbunden ist.

7. Kraftfahrzeug (1) nach einem der Ansprüche 5 und 6, **dadurch gekennzeichnet, dass** es ein Mittel (140) zum Verbinden des Wärmemotors (130) und des Elektromotors (110) umfasst.

8. Kraftfahrzeug (1) nach einem der Ansprüche 5 bis 7, **dadurch gekennzeichnet, dass** es einen zweiten Elektromotor (160) umfasst, der mit mindestens einem Hinterrad (220) des Kraftfahrzeugs (1) gekoppelt ist und dass der Elektromotor (110) und der Thermomotor (130) sind mit mindestens einem Vorderrad (210) des Kraftfahrzeugs (1) gekoppelt.

9. Kraftfahrzeug (1) nach dem vorhergehenden Anspruch, **dadurch gekennzeichnet, dass** der zweite Elektromotor (160) mit einem zweiten Wechselrichter (162) versehen ist, wobei der zweite Wechselrichter (162) über den mit dem elektrischen Netz (410) verbunden ist Konverter (300).

10. Kraftfahrzeug (1) nach einem der Ansprüche 6 bis 9, **dadurch gekennzeichnet, dass** der Generator (500) ein Startergenerator ist oder dass der Generator (500) ein Startergenerator ist und das Fahrzeug (1) ein Automobil umfasst Steckdose (600), die das Aufladen der Traktionsbatterie (150) über eine externe Stromversorgung ermöglicht.

## Claims

1. Method (1000) for supplying an electrical network (410) of an automobile vehicle (1) during a driving phase carried out by means of an electric motor (110,160) of the automobile vehicle (1), the automobile vehicle (1) comprising a thermal engine (130), an alternator (500) driven by the thermal engine (130), the alternator (500) being connected to the electrical network (410), and a converter (300) of power ensuring the supply of electrical energy to the electrical network (410), the supply method (1000) comprising a step (1002) of comparing a current value (Tc) of a temperature (T) of the converter (300 ) with a threshold value (T₁,T₂) and, when the current value (Tc) of the temperature (T) of the converter (300) is greater than the threshold value (T₁,T₂), a step (1004) of reducing the electrical energy supply supplied by the converter (300) to the electrical network (410), the supply method (1000) being **characterized in that** it comprises, before the step (1004) of reduction of the power supply, a step (1003) of inspecting a state (E_{M}) of operation of the thermal motor (130) and, when, during said inspection step (1003), the thermal motor (130) is in operation, the method (1000) comprises a step (1005) of compensating the step (1004) of reducing the electrical energy supply supplied by the converter (300) to the electrical network (410), by a power supply (A_{F}) in electrical energy from the electrical network (410) by the alternator (500).

2. Power supply method (1000) according to the preceding claim, **characterized in that** it comprises, when, during the step (1003) of inspecting the operating state (E_{M}) of the thermal motor (130), the thermal engine (130) is stopped, another step (1006) of comparing the current value (Tc) of said temperature (T) recorded with a critical value (T₃, T₄), the value (T₁,T₂) threshold being lower than the critical value (T₃, T₄) and, when the current value (Tc) of the temperature (T) is greater than the critical value (T₃, T₄), said method (1000) comprises a step (1007) of forced starting (D_{F}) of the thermal motor (130), and a step (1008) of weakening the electrical energy supply supplied by the converter (300) to the electrical network (410), the weakening step (1008) being compensated by a compensation step (1009) by a supply (A_{F}) of electrical energy from the electrical network (410) by the alternator (500).

3. Supply method (1000) according to the preceding claim, **characterized in that** the critical value (T₃, T₄) is segmented into a critical increase value (T₄) and a lower critical decrease value (T₃) at the critical increase value (T₄) and **in that**, when the current value (Tc) of the temperature (T) of the converter (300) increases and is greater than the critical increase value (T₄), the thermal engine (130) is started and the alternator (500) is used to power the electrical network (410) until the current value (Tc) of the temperature (T) is lower than the value (T₃) critical decrease.

4. Supply method (1000) according to any one of the preceding claims, **characterized in that** the threshold value (T₁,T₂) is segmented into an increase threshold value (T₂) and a value (T₁) reduction threshold lower than the value (T₂) increase threshold and **in that**, when the current value (Tc) of the temperature (T) of the converter (300) increases and is between the value (T₂) increase threshold and the critical value (T₃, T₄) and when the thermal engine (130) is in operation, the alternator (500) is used to power the electrical network (410) until the value (Tc) current temperature (T) is lower than the value (T₁) reduction threshold.

5. Motor vehicle (1) comprising:
- an electrical network (410);
- an electric motor (110,160);
- a thermal engine (130);
- an alternator (500) driven by the thermal engine (130), the alternator (500) being connected to the electrical network (410);
- a converter (300) ensuring the supply of electrical energy to the electrical network (410);
- a temperature sensor (T) of the converter (300);
the automobile vehicle (1) being **characterized in that** it comprises means (2000) for implementing a power supply method (1000) according to any one of the preceding claims.

6. Motor vehicle (1) according to the preceding claim, **characterized in that** it comprises a traction battery (150) and **in that** the electric motor (110,160) comprises an inverter (112,162), the traction battery (150) and the the inverter (112,162) being connected to the electrical network (410) via the converter (300).

7. vehicle (1) according to one of claims 5 and 6, **characterized in that** it comprises a means (140) for connecting the thermal engine (130) and the electric motor (110).

8. Motor vehicle (1) according to any one of claims 5 to 7, **characterized in that** it comprises a second electric motor (160) coupled to at least one rear wheel (220) of the motor vehicle (1) and **in that** the electric motor (110) and the thermal motor (130) are coupled to at least one front wheel (210) of the automobile vehicle (1).

9. Motor vehicle (1) according to the preceding claim, **characterized in that** the second electric motor (160) is provided with a second inverter (162), the second inverter (162) being connected to the electrical network (410) by means of the converter (300).

10. Motor vehicle (1) according to any one of claims 6 to 9, **characterized in that** the alternator (500) is an alternator-starter or **in that** the alternator (500) is an alternator-starter and the vehicle (1) automobile includes a socket (600) allowing the traction battery (150) to be recharged by an external power supply.
